# EUROPEAN PATENT APPLICATION

(11) **EP 3 181 400 A1**
(43) Date of publication of application: **21.06.2017**
(21) Application number: 16203924.2
(22) Date of filing: 14.12.2016
(51) Int. Cl.: B60P 7/08

(54) **MODULAR CARGO TIE DOWN RING**

(30) Priority: 15.12.2015 TR 201516108
(71) Applicant: Tirsan Treyler Sanayi Ve Ticaret Anonim Sirketi, 54580 Sakarya (TR)
(72) Inventor: KARAMANLI, Arma an Fatih, SAKARYA (TR); KAÇAR, Batuhan Furkan, SAKARYA (TR)
(74) Representative: Dereligil, Ersin

(57) **Abstract**

The invention is a modular cargo tie down ring (2) that can be used for tying cargo tie down ropes which are used for fixing the load in load-carrying vehicles like trailer, semi-trailer and trucks, and in addition to cargo tie down rings, which are present on both sides of vehicle platform as standard, when necessary; and it comprises a body (2.1) to enable formal attachment of this cargo tie down ring (2) with kingpost slots (1.1) that already exist on vehicle platform (1).

## Description

### TECHNICAL FIELD

The invention is related to modular adaptors for cargo tie down rings that allow for the use of additional cargo tie down rings in order to tie cargo tie down ropes in all vehicles incorporating pillar kingpost slot. The invention is ancillary equipment that is used to fix all kinds of loads on the vehicle, and contributes to the improvement of load securing.

### PREVIOUS TECHNIQUE

Vehicles like trailer, semi-trailer and truck use cargo tie down rings on both sides of the vehicle for fixation of loads that they carry. Cargo tie down rings allow for tying cargo tie down ropes, which are used to fix the load, on two sides of the vehicle. However, in some cases, it can be necessary to tie the load on vehicle platform with additional ropes and on different points. Currently, additional cargo tie down rings are not available for this function for such cases.

Therefore, it was required to develop an additional cargo tie down rope and a cargo tie down ring accordingly for these situations.

### SHORT EXPLANATION OF THE INVENTION

In order to eliminate the abovementioned disadvantages and bring new advantages to the relevant technical field, this invention is related to a modular cargo tie down ring which allows for creating additional rings by establishing a formal connection with spaces on the vehicle called pillar kingpost slots and enables the use of additional cargo tie down ropes accordingly.

Main purpose of the invention is to enable the use of additional cargo tie down ropes by establishing a formal connection with pillar kingpost slots on the trailer.
Another purpose of the invention is to make modular use not to occupy pillar kingpost slots when it will be attached to pillar kingpost slots and thus will not be used.

Another purpose of the invention is to ensure that these cargo tie down rings, which will allow for the use of additional cargo tie down ropes, do not require extra equipment in the vehicle as slot and therefore, adapt to all kinds of vehicles easily.

The current invention comprises a cargo tie down ring where cargo tie down rope will be tied, a bearing for cargo tie down ring that allows for its rotation, a plate to provide integrity and connection of bearing of cargo tie down ring with the body, and a body that enables connection between modular cargo tie down ring and kingpost slots on the vehicle platform, in order to meet all purposes that are mentioned above and arise out of the detailed explanation below.

This invention should be evaluated by taking the figures and their detailed explanations below into account in order to understand its structure and advantages with additional elements in the best way possible.

### SHORT EXPLANATION OF FIGURES

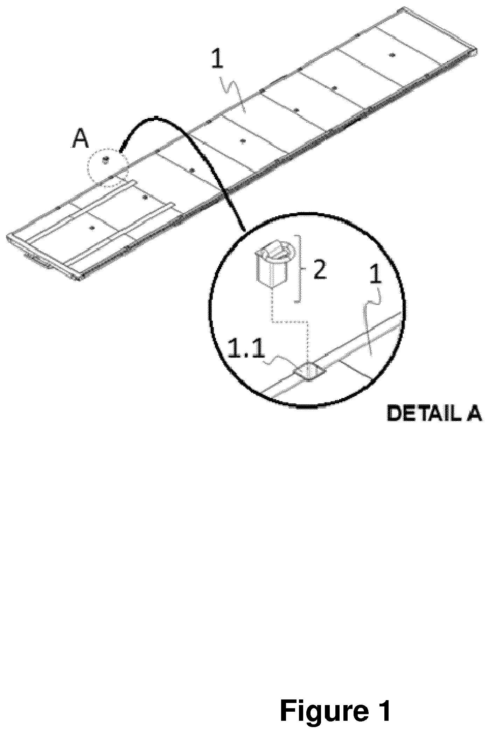

Figure 1 shows the connection of vehicle platform, kingpost slots on it and modular tie down rings in our invention with kingpost slots on the vehicle.

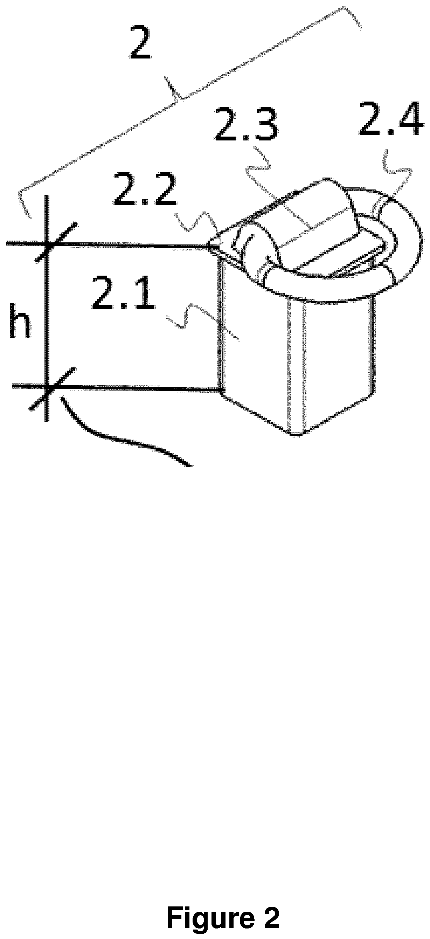

Figure 2 is isometric view of modular cargo tie down ring in our invention.

### REFERENCE NUMBERS

- 1.: Vehicle Platform
1.1. Kingpost Slot
- 2.: Modular Cargo Tie Down Ring
2.1. Body
2.2. Plate
2.3. Ring Bearing
2.4. Ring
- h.: Body Height

### DETAILED EXPLANATION OF THE INVENTION

In this detailed explanation, the innovation in our invention is explained through examples which are only aimed at better understanding of the subject and will not create any limiting impacts.

Kingpost pillars are used to fix loads that are placed on vehicle platform (1) in trailers, semi-trailers and trucks. These kingpost pillars are attached to kingpost slots (1.1) on vehicle platform (1) by forming a formal connection and prevent the load to fall from vehicle platform (1) during travel by surrounding the load.

Modular cargo tie down ring (2) in our invention forms a formal connection with these kingpost slots (1.1), and enables the use of modular cargo tie down ring (2) in addition to such rings on both sides of vehicle platform when the use of additional cargo tie down rope is required.

Modular cargo tie down ring (2) in our invention to be used in trailers, semi-trailers and trucks comprises a ring (2.4) where cargo tie down rope will be tied, a bearing for cargo tie down ring (2.3) that allows for its rotation, a plate (2.2) to provide integrity and connection of bearing of cargo tie down ring (2.3) with the body (2.1), and a body that enables connection between modular cargo tie down ring (2) and kingpost slots (1.1) on the vehicle platform (1).

Modular cargo tie down ring (2) in our invention can be removed from kingpost slot (1.1) by pulling its ring (2.4) when it will not be used.

## Claims

1. The invention is a modular cargo tie down ring (2) that can be used for tying cargo tie down ropes which are used for fixing the load in load-carrying vehicles like trailer, semi-trailer and trucks, and in addition to cargo tie down rings, which are present on both sides of vehicle platform as standard, when necessary; and it comprises a body (2.1) to enable formal attachment of this cargo tie down ring (2) with kingpost slots (1.1) that already exist on vehicle platform (1).

2. It is a cargo tie down ring (2) in accordance with Claim 1, and it is characterized with being attached to kingpost slot (1.1) thanks to the body (2.1) and having a certain body height (h) to prevent displacement of modular cargo tie down ring (2) due to lateral loads.
